# EUROPEAN PATENT SPECIFICATION

(11) **EP 0 453 248 B1**
(45) Date of publication and mention of the grant of the patent: **11.01.1995**
(21) Application number: 91303397.3
(22) Date of filing: 17.04.1991
(51) Int. Cl.: A21C 3/02, A21C 3/04

(54) **Method and apparatus for manufacturing continuous sheets of bread dough**
Verfahren und Vorrichtung zur Herstellung von Bahnen aus Brotteig
Procédé et appareil pour la production de feuilles continues de pâte à pain

(30) Priority: 17.04.1990 JP 101078/90
(43) Date of publication of application: 23.10.1991
(73) Proprietor: RHEON AUTOMATIC MACHINERY CO., LTD., Utsunomiya-shi Tochigi-ken (JP)
(72) Inventor: Hayashi, Torahiko, Utsunomiya-shi, Tochigi-ken (JP)
(74) Representative: Leale, Robin George

(56) References cited:
- EP-A- 0 124 487
- EP-A- 0 128 015
- EP-A- 0 415 714
- GB-A- 104 720
- GB-A- 1 115 859
- GB-A- 1 228 049
- US-A- 2 642 013

## Description

This invention relates to a method and apparatus for shaping elastic materials such as bread dough, and more particularly to a method and apparatus for producing a continuous sheet of bread dough.

In one prior art method of producing bread a large mass of dough, prepared by kneading flour, water, etc. by means of a mixer, is metered and then divided into small pieces of dough, each piece being of the same weight as the desired end product, which is sometimes very small. There are many inconvenient features in this process, in that when very small pieces of dough are formed at the outset, the bread-making process is made more complicated, errors in the weight of the product are large, the efficiency of the process is hindered, and the range within which the size of the product can be changed is limited.

It is also known to produce bread by first forming a continuous belt-shaped dough sheet and the dividing it into pieces of dough that are the size of the pieces of bread to be produced. However, due to the characteristics of the bread dough itself, namely the gel structure of gluten and the high elasticity resulting from such structure, it has been difficult to produce a continuous belt of bread dough with sections of a uniform weight. Hence, such a belt of bread dough is conventionally produced by repeatedly passing the bread dough between a pair of rollers, whereby the elastic bread dough is forcibly moved and, as a consequence, the gel structure tends to be destroyed. Thus, this prior art method of producing bread dough is a process of plastic molding, in which rollers bring about a repetitive application of force to the bread dough. This method is not suited for producing traditional high-quality bread comparable to hand-made bread. It is known, after mixing the ingredients and dividing the bread dough into small round pieces, to age the dough pieces for a long time in order to restore the original gel structure of the protein. This effect is induced by an oxidizing agent that is added in advance to the dough. The dough is then shaped and baked.

GB-A-1115859 discloses a device for kneading and shaping dough having a pair of counter-rotatable cylinders with radially projecting parts between which the dough passes.

US-A-2642013 discloses a means for continuously shaping and feeding dough having a V-belt arrangement through which the dough passes.

US-A-4,629,110 discloses an apparatus for stretching dough in which a plurality of conveyors, each driven at a different speed, are serially disposed. The apparatus has a roller mechanism comprising a plurality of rollers which are freely rotatable about their axes, which constitute a straight path, and which are spaced from and located over the conveyors. Although in this prior art apparatus the dough is smoothly stretched, the roller mechanism has a heavy and complex structure, which involves high production, maintenance, and repair costs. Therefore, an apparatus for stretching dough which is simple, which functions reliably, and which has low production costs, it to be desired.

Viewed from one aspect the present invention provides a method of producing a continuous belt-like sheet of bread dough, comprising the steps of:
conveying bread dough downwardly by means of vertical conveyors located on two sides of a dough hopper having an inlet, a hopper body, and an outlet; and
controlling the cross section of the said outlet so that the instantaneous volume of the bread dough discharged from the outlet has a substantially constant relationship to the instantaneous volume of bread dough passing downwardly through the hopper body.

Viewed from another aspect the invention provides apparatus for producing a continuous belt-like sheet of bread dough, comprising:
a dough hopper having an inlet at the top, an outlet at the bottom, and a hopper body between the inlet and the outlet, a vertical conveyor being located on each of two sides of the hopper body;
the dough outlet being defined by a pair of discharging rolls which face each other and are arranged to rotate so as to pass the bread dough downwardly therebetween, and means being provided for controlling the spacing between the said discharging rolls and their peripheral speed.

An embodiment of the invention will now be described by way of example and with reference to the accompanying drawings, in which:-
Fig. 1 is a schematic sectional front view of an apparatus according to the invention for manufacturing a belt-like sheet of bread dough;
Fig. 2 is a schematic partial cross section of the apparatus of Fig. 1, intended to explain the function of each component of the apparatus; and
Fig. 3 is a schematic block diagram intended to explain the functional system of the apparatus.

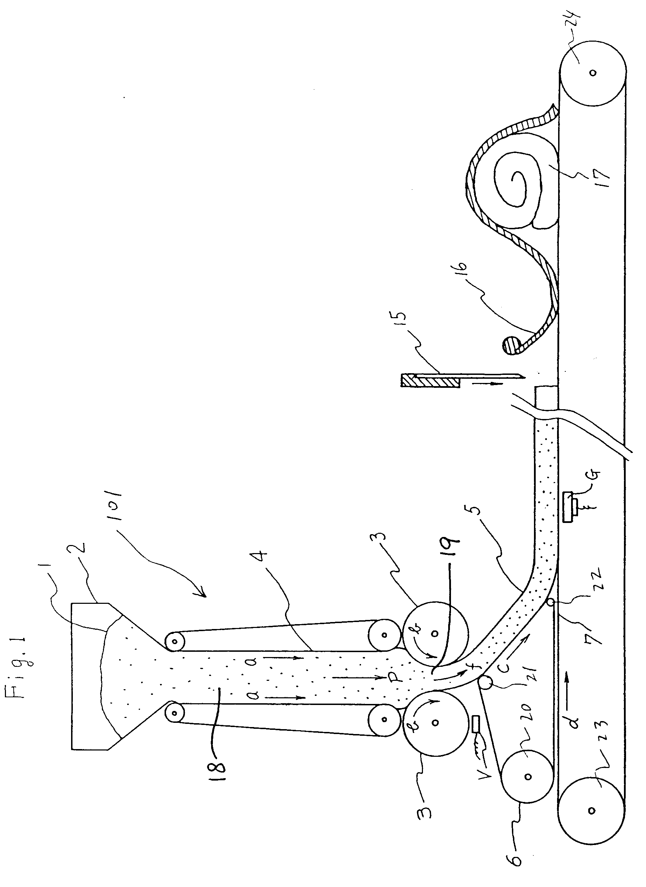

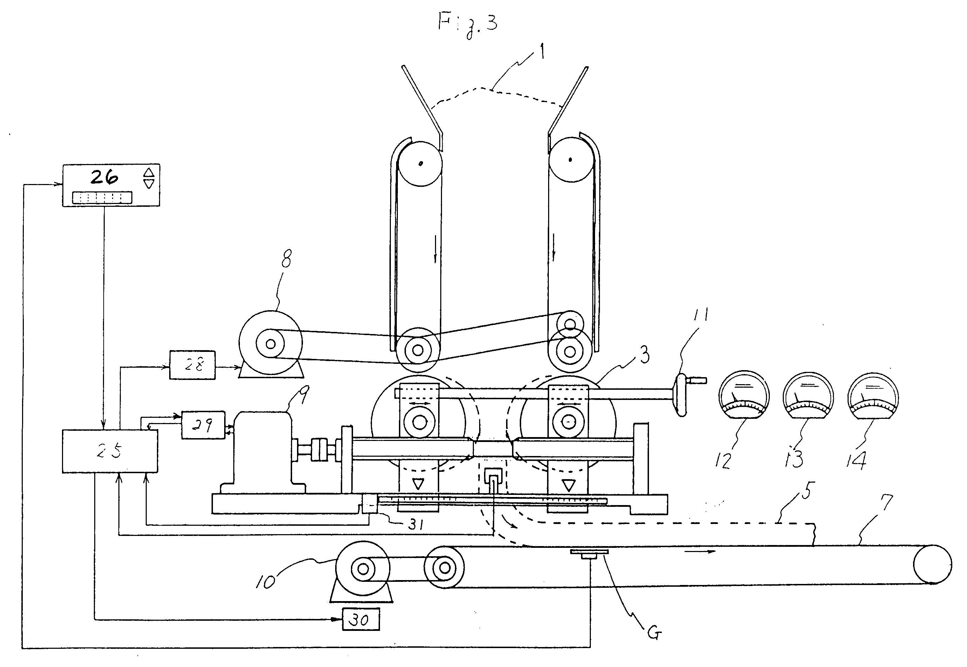

In Fig. 1, a hopper 101 receives, stocks, and transfers bread dough 1, which has been kneaded by a mixer (not shown). The hopper comprises an inlet 2, a box-like body 18 extending downwardly from the inlet, and a pair of discharging rolls 3 defining an outlet 19 therebetween. The inlet 2 has a wide top opening to receive dough and a narrowed bottom connected to the box-like hopper body 18. The body 18 is rectangular in cross section, defined by a front wall, a rear wall, and two side walls. Each of the two side walls is constituted by a vertical conveyor 4. Each such vertical conveyor comprises a conveyor belt wound around two rolls, one of which is driven by a motor 8 (Fig. 3). The other roll is freely rotatable. The inner flights of the conveyors are arranged to move downwards, as shown by arrows a, at the same speed.

The speed of the vertical conveyors 4 is adjustable by adjusting the driving mechanism, and is selected so that the dough within the hopper body 18 descends at substantially the same speed as that of the vertical conveyors.

At the bottom of the body 18 the discharging rolls 3 are disposed so that they face each other, and here they rotate in the same direction, i.e. downwards. The distance between the discharging rolls 3 can be adjusted by moving one or both of the rolls horizontally, as will be explained later in connection with Fig. 3. The rolls 3 are driven by a motor 9.

Beneath the outlet 19 is provided an inclined conveyor 6 comprising a belt wound around rolls 20, 21 and 22. The roll 21 is positioned immediately beneath the outlet 19 and forms a flight for the belt together with the roll 22 so that the belt forms an inclined path for the dough coming from the outlet 19. The roll 20 is driven by a motor (not shown), and the other two rolls are freely rotatable.

A transfer conveyor 7 is provided underneath the inclined conveyor 6. The transfer conveyor 7 comprises a conveyor belt wound about two rolls 23 and 24, and has a lengthy upper flight. The roll 23 is driven by a motor 10 (Fig. 3) and the other roll 24 is freely rotatable. Various shaping devices, including a divider 15 for dividing the dough sheet 5, and a wind-up means 16, are disposed along the downstream part of the transfer conveyor 7. The divider 15 is a vertical cutter with a cutting edge at its bottom, arranged to make vertical reciprocal movements to cut the dough sheet 5 on the transfer conveyor 7. The wind-up means 16 comprises a chain-belt form metal sheet suspended from a horizontal bar which crosses the transfer conveyor 7 above the same.

A speed sensor V is provided underneath one of the discharging rolls 3 to measure the speed f of the dough sheet passing through the gap between the discharging rolls. A weight sensor G is mounted to a frame (not shown) under the top flight of the transfer conveyor 7 at a point downstream of the inclined conveyor 6. This sensor continuously measures the weight g of the belt-like dough sheet 5 passing over it, so that the production per unit time can always be indicated, based also on the measurements of speed f.

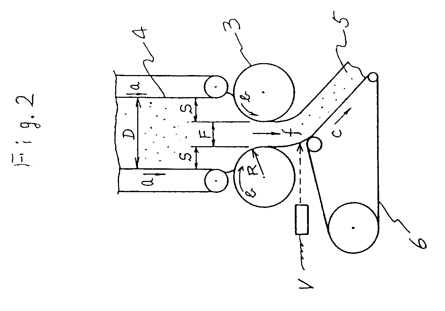

Fig. 2 schematically shows the positional and functional relationships of the components that constitute the apparatus. If the cross-sectional area of the space formed between the facing vertical conveyors 4 is assumed to be D, the cross-sectional area of the space formed between the facing discharging rolls 3 is assumed to be F, the difference between the sectional areas D and F is assumed to be S, the speed of the vertical conveyors 4 is assumed to be a, the peripheral speed of the discharging rolls 3 is assumed to be b, and the flow speed of the dough sheet, measured just after it has passed through the discharging rolls 3, is assumed to be f, the apparatus is designed to realize the following equation, in operation:

$\text{D a/F b=k}$

wherein k is a constant.

The above is based on the observation that if the instantaneous force that is exerted on the bread dough that is being fed through the hopper body always corresponds to the instantaneous force that is exerted on the bread dough that is being discharged through the discharging rolls, the gel structure of the dough is not injured, and that this condition can be substantially fulfilled when the instantaneous volume of the dough descending through the hopper body is directly proportional to that of the dough passing out through the discharging rolls, as shown by the above equation, provided that the proportion of b to f is within a certain range, which range depends on the nature of the dough being fed.

The cause of this limitation on the range of the proportion of b to f is the need to avoid the generation of an eddy that is generated by the resistance of dough around the lower part of the descending vertical conveyors to the driving force from those conveyors, caused by the difference between D and F, which causes a turbulent flow.

In the apparatus of this embodiment the difference S between D and F is intentionally provided as a function that is needed to steadily discharge the accurately sheeted bread dough. It has been experimentally proven that even if F is smaller than D, the gel structure of the discharged dough remains uninjured so long as the above equation is fulfilled and the proportion of b to f is within a range which avoids turbulent flow. This range varies widely depending on the consistency of the dough, the ratio of speed a to speed b, and the ratio of area F to area D, etc.

In the apparatus of this embodiment the dough flows freely while the inherent strength of the gel is kept unchanged. Dough sheeting is achieved by allowing the elastic behaviour of the gel of the dough to operate freely, so as to obtain products of a stable quality that are steadily discharged from the apparatus, without damaging the characteristics of the dough material, such as its viscoelasticity.

Since the factor which tends to destroy the gel structure is a shearing stress, and such stress is caused by excessive differences in the speed of flow among different parts of the dough, and eddies that are generated inside the dough when it is flowing, the method and apparatus of this invention aim at reducing such shearing stress.

In the method of this embodiment the vertical conveyors 4 cause the dough 1 to move downwards in such manner there is no difference in speed between the surfaces of the dough facing the inner surface of the hopper body 18 and the central part of the dough. The gap between the rolls 3 at the bottom of the hopper is adjusted depending on the gel strength of the dough, so that the generation of shearing stress around the outlet is controlled. When the gap between the rolls 3 is adjusted, the peripheral speed of the rolls is simultaneously also adjusted so that the above mentioned equation is still realized. Thus the generation of an eddy around the outlet of the discharging rolls is avoided so that a constant quantity of the sheeted bread dough which is discharged can be continuously and steadily achieved.

In Figs. 1 and 2, the conveying speed of the inclined conveyer 6 is indicated by c, and that of the transfer conveyor 7 by d. These speeds are substantially the same as the speed f of the dough coming out of the rolls 3.

Referring to Fig. 3, the rotational speeds of all of the motors for driving the conveyors and the discharging rolls are controlled by a computer 25. As already mentioned, the lower roll of one of the vertical conveyors 4 is driven by a motor 8. A chain belt is wound around a sprocket attached to the shaft of the motor 8 and the shaft of the roll in question, to convey the drive to the roll. The lower roll of the other conveyor 4 is connected by another chain belt and sprocket assembly so that it is driven via the roll of the first conveyor. The discharging rolls 3 are operatively connected to the motor 9 by a horizontal shaft extending from the motor, the shaft being provided with worms meshing with a worm wheel mounted to an end of each discharging roll 3. The transfer conveyor 7 is connected to the motor 10 by means of a chain and sprocket assembly. Inverters 28, 29 and 30 for adjusting the speeds of the motors 8, 9 and 10 respectively are connected between the motors and the computer 25, which determines optimum speeds for each of the motors based on information on the peripheral speed b of the rolls 3. This information is in turn derived from the speed of the motor 9 for driving the rolls 3, through feedback lines connecting the motor 9 and the computer 25 via the inverter 29, discharging dough speed f derived from sensor V, weight of the dough sheet 5 derived from sensor G, and the gap of the outlet 19 which is obtained by a counter 31 located near the base for the motor 9. The adjustment of this gap is effected by a gap-setting handle 11 attached to a bar threaded through end plates on the discharging rolls 3. When the handle 11 is operated the gap is adjusted, in that a clockwise movement of the handle causes the rolls 3 to move apart and a counterclockwise movement causes the rolls to move closer. The drawing shows a manually operated handle, but it can be operated automatically based on a computer calculation. A gap indicator 12, a discharging roll peripheral speed meter 13, and a discharging dough speed meter 14, show relevant values for visual observation.

The operation of the apparatus of this embodiment will now be explained by reference to Figs. 1 and 3. The bread dough is fed into the hopper inlet 2 and thence to the box-like body 18. When the vertical conveyors 4 move downwards as shown by arrows a and the rolls 3 rotate as shown by arrows b, a belt-like bread dough sheet 5 passes out of the outlet 19, and is transferred by the inclined conveyor 6 to the transfer conveyor 7. The dough sheet is then cut by the divider 15, rolled up by the wind-up means 16, and fed to a subsequent station.

As the dough leaves the discharging rolls 3 the speed of the dough flow f and the peripheral speed b of the rolls 3 are compared by the computer 25. If the ratio between them is not within the desired range, the handle 11 is operated to adjust the gap so as to attain a ratio within that range. If the handle 11 is operated, both the cross-sectional area F of the outlet and the peripheral speed b of the discharging rolls are automatically adjusted by the computer 25 so as to realize the equation $\text{D a/F b=k}$ 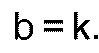 . This adjustment is carried out in that when the handle 11 is operated the information from the counter 31 is fed into the computer, and then the computer causes the inverter 29 to control the motor 9, according to the gap information, to adjust the speed of the discharging rolls 3.

As previously mentioned, the weight sensor G mounted on the transfer conveyor 7 detects the weight of the produced dough sheet 5. This weight information is fed into the computer via an output indicator 26, to simultaneously drive inverters 28, 29 and 30 so that the rotational speeds of the motors for driving the vertical conveyors 4, the discharging rolls 3, and the transfer conveyor 7 respectively are adjusted, using predetermined conversion ratios, so as to automatically maintain a constant production amount of the dough sheet throughout the operation of the apparatus. The production amount of the dough sheet is indicated by the output indicator 26.

Thus, as is explained above, by providing vertical feed conveyors and discharging rolls so that the amount of the supply of bread dough substantially coincides with the discharge of the bread dough, and by controlling the gap between the discharging rolls so that the discharging speed of the dough corresponds to the peripheral speed of the discharging rolls, the method and apparatus of this embodiment can continuously produce a stable high-quality belt-like sheet of bread-dough, while maintaining the gel structure of the dough uninjured.

It will thus be seen that the present invention, at least in its preferred forms, provides a method and apparatus for producing a continuous belt of bread dough without destroying the gel structure of the bread dough, by allowing it to flow freely within the limits of its inherent elasticity; and furthermore provides a method and apparatus for steadily and continuously supplying a belt-like bread dough sheet so as to continuously produce a dough product.

## Claims

1. A method of producing a continuous belt-like sheet (5) of bread dough, comprising the steps of:
conveying bread dough (1) downwardly by means of vertical conveyors (4) located on two sides of a dough hopper having an inlet (2), a hopper body (18), and an outlet (19); and
controlling the cross section of the said outlet so that the instantaneous volume of the bread dough discharged from the outlet has a substantially constant relationship to the instantaneous volume of bread dough passing downwardly through the hopper body.

2. A method of producing a continuous belt-like sheet (5) of bread dough comprising the steps of:
conveying bread dough (1) downwardly through a hopper having an inlet (2), a hopper body (18) having two facing sides each of which is formed by a vertical conveyor (4), and an outlet (19), the outlet being formed by a space between a pair of discharging rolls (3);
controlling the cross-sectional area of the outlet (19) such that the instantaneous volume of the bread dough discharged from the outlet proportionally corresponds to the instantaneous volume of the bread dough passing downwardly through the hopper body (18); and
controlling the speed of the discharging rolls (3) so as to establish a substantially constant relationship between the peripheral speed of the discharging rolls and the speed of the bread dough passing through the outlet.

3. Apparatus for producing a continuous belt-like sheet (5) of bread dough, comprising:
a dough hopper having an inlet (2) at the top, an outlet (19) at the bottom, and a hopper body (18) between the inlet and the outlet, a vertical conveyor (4) being located on each of two sides of the hopper body (18);
the dough outlet (19) being defined by a pair of discharging rolls (3) which face each other and are arranged to rotate so as to pass the bread dough downwardly therebetween, and means being provided for controlling the spacing between the said discharging rolls and their peripheral speed.

4. Apparatus for producing a continuous belt-like sheet (5) of bread dough, comprising:
a dough hopper having an inlet (2), a hopper body (18) on two sides of which are provided vertical conveyors (4), and a dough outlet (19) at the bottom of the hopper; and
a pair of discharging rolls (3) which face each other at the dough outlet and are rotatable so as to pass the bread dough downwardly therebetween, the spacing between the said discharging rolls and their peripheral speed being controllable in such manner that, if the sectional area defined by the vertical conveyors is D, the downward speed of the vertical conveyors is a, the sectional area defined by the discharging rolls is F, and the peripheral speed of the discharging rolls is b, the following equation is realized:
$\text{D x a/F x b =k}$
where k is a constant.

## Patentansprüche

1. Verfahren zum Herstellen einer kontinuierlichen bandartigen Bahn (5) aus Brotteig, umfassend die Schritte des:
Förderns von Brotteig (1) nach unten mittels vertikaler Förderer (4), die an zwei Seiten eines Teigtrichters angeordnet sind, der einen Einlaß (2), einen Trichterkörper (18) und einen Auslaß (19) hat; und des
Steuerns des Querschnitts des Auslasses derart, daß das augenblickliche Volumen des Brotteigs, das aus dem Auslaß abgegeben wird, ein im wesentlichen konstantes Verhältnis zu dem augenblicklichen Volumen an Brotteig hat, das durch den Trichterkörper nach unten hindurchgeht.

2. Verfahren zum Herstellen einer kontinuierlichen bandartigen Bahn (5) aus Brotteig, umfassend die Schritte des:
Förderns von Brotteig (1) nach unten durch einen Trichter, der einen Einlaß (2), einen Trichterkörper (18), welcher zwei einander zugewandte Seiten hat, deren jede durch einen vertikalen Förderer (4) gebildet ist, und einen Auslaß (19) hat, der durch einen Raum zwischen einem Paar von Abgaberollen (3) gebildet ist; des
Steuerns der Querschnittsfläche des Auslasses (19) derart, daß das augenblickliche Volumen des Brotteigs, das aus dem Auslaß abgegeben wird, dem augenblicklichen Volumen des Brotteigs proportional entspricht, das durch den Trichterkörper (18) nach unten hindurchgeht; und des
Steuerns der Geschwindigkeit der Abgaberollen (3) derart, daß ein im wesentlichen konstantes Verhältnis zwischen der Umfangsgeschwindigkeit der Abgaberollen und der Geschwindigkeit des durch den Auslaß hindurchgehenden Brotteigs hervorgerufen wird.

3. Vorrichtung zum Herstellen einer kontinuierlichen bandartigen Bahn (5) aus Brotteig, umfassend:
einen Teigtrichter, der einen Einlaß (2) an der Oberseite, einen Auslaß (19) an dem Boden und einen Trichterkörper (18) zwischen dem Einlaß und dem Auslaß hat, wobei ein vertikaler Förderer (4) an jeder der beiden Seiten des Trichterkörpers (18) angeordnet ist;
der Teigauslaß (19) durch ein Paar von Abgaberollen (3) gebildet ist, die einander zugewandt und so angeordnet sind, daß sie sich derart drehen, daß der Brotteig zwischen ihnen nach unten hindurchgeht, und wobei Mittel vorgesehen sind zum Steuern des Abstandes zwischen den Abgaberollen und ihrer Umfangsgeschwindigkeit.

4. Vorrichtung zum Herstellen einer kontinuierlichen bandartigen Bahn (5) aus Brotteig, umfassend:
einen Teigtrichter, der einen Einlaß (2), einen Trichterkörper (18), bei welchem an zwei Seiten von ihm vertikale Förderer (4) vorgesehen sind, und einen Teigauslaß (19) an dem Boden des Trichters hat; und
ein Paar von Abgaberollen (3), die an dem Teigauslaß aneinander zugewandt und derart drehbar sind, daß der Brotteig zwischen ihnen nach unten hindurchgeht, wobei der Abstand zwischen den Abgaberollen und ihre Umfangsgeschwindigkeit derart steuerbar sind, daß, wenn die Querschnittsfläche, die durch die vertikalen Förderer bestimmt ist, D beträgt, die Abwärtsgeschwindigkeit der vertikalen Förderer a beträgt, die Querschnittsfläche, die durch die Abgaberollen bestimmt ist, F beträgt, und die Umfangsgeschwindigkeit der Abgaberollen b beträgt, die nachstehende Gleichung verwirklicht ist:
$\text{D x a/F x b = k ,}$
worin k eine Konstante ist.

## Revendications

1. Procédé de production d'une feuille (5) de pâte à pain analogue à une bande continue, comprenant les étapes qui consistent :
à transporter de la pâte à pain (1) vers le bas au moyen de transporteurs verticaux (4) placés sur deux côtés d'une trémie à pâte ayant une entrée (2), un corps (18) de trémie et une sortie (19) ; et
à régler la section transversale de ladite sortie afin que le volume instantané de la pâte à pain déchargé de la sortie soit en relation sensiblement constante avec le volume instantané de pâte à pain descendant à travers le corps de la trémie.

2. Procédé de production d'une feuille (5) de pâte à pain analogue à une bande continue, comprenant les étapes qui consistent :
à transporter de la pâte à pain (1) vers le bas à travers une trémie ayant une entrée (2), un corps (18) de trémie ayant deux côtés face à face formés chacun par un transporteur vertical (4), et une sortie (19), la sortie étant formée par un espace entre deux rouleaux (3) de déchargement ;
à régler la section transversale de la sortie (19) de manière que le volume instantané de la pâte à pain déchargé de la sortie corresponde proportionnellement au volume instantané de la pâte à pain descendant à travers le corps (18) de la trémie ; et
à régler la vitesse des rouleaux (3) de déchargement afin d'établir une relation sensiblement constante entre la vitesse périphérique des rouleaux de déchargement et la vitesse de la pâte à pain passant à travers la sortie.

3. Appareil pour produire une feuille (5) de pâte à pain analogue à une bande continue, comportant :
une trémie à pâte ayant une entrée (2) au sommet, une sortie (19) au fond et un corps (18) de trémie entre l'entrée et la sortie, un transporteur vertical (4) étant placé sur chacun de deux côtés du corps (18) de la trémie :
la sortie (19) de pâte étant définie par deux rouleaux (3) de déchargement qui sont face à face et qui sont agencés de façon à tourner pour faire descendre entre eux la pâte à pain, et des moyens étant prévus pour régler l'écartement entre lesdits rouleaux de déchargement et leur vitesse périphérique.

4. Appareil pour produire une feuille (5) de pâte à pain analogue à une bande continue, comportant :
une trémie à pâte ayant une entrée (2), un corps (18) de trémie sur deux côtés duquel sont prévus des transporteurs verticaux (4), et une sortie (19) de pâte au fond de la trémie : et
deux rouleaux (3) de déchargement qui se font face à la sortie de la pâte et qui peuvent tourner de façon que la pâte à pain descende entre eux, l'espace entre lesdits rouleaux de déchargement et leur vitesse périphérique pouvant être réglé de manière que, si la section transversale définie par les transporteurs verticaux est D, la vitesse de descente des transporteurs verticaux est a, la section transversale définie par les rouleaux de déchargement est F et la vitesse périphérique des rouleaux de déchargement est b, l'équation suivante soit réalisée :
$\text{D x a/f x b = k}$
où k est une constante.
